# EUROPEAN PATENT SPECIFICATION

(11) **EP 4 514 900 B1**
(45) Date of publication and mention of the grant of the patent: **05.11.2025**
(21) Application number: 22725452.1
(22) Date of filing: 25.04.2022
(51) Int. Cl.: C08L 83/04, C08L 5/16

(54) **CYCLODEXTRIN INCORPORATED SILICONE MATERIALS AND THEIR USE AS CARRIERS FOR ACTIVES**
CYCLODEXTRIN-ENTHALTENDE SILIKONMATERIALIEN UND IHRE VERWENDUNG ALS TRÄGER FÜR WIRKSTOFFE
MATÉRIAUX EN SILICONE DANS LESQUELS DE LA CYCLODEXTRINE EST INCORPORÉE ET LEUR UTILISATION EN TANT QUE SUPPORTS POUR DES ACTIFS

(43) Date of publication of application: 05.03.2025
(73) Proprietor: Wacker Chemie AG, 81671 München (DE)
(72) Inventor: MITRA, Amitabha, Saline, Michigan 48176 (US); GUTMAN, Megan, 80469 München (DE); HARTMAN, Christian, Grand Rapids, Ml 49525 (US); POPOVA-GUEORGUIEVA, Vera, Ypsilanti, Michigan 48197 (US)
(74) Representative: Mieskes, Klaus Theoderich
(86) International application number: PCT/EP2022/060932
(87) International publication number: WO 2023/208316

(56) References cited:
- WO-A1-2020/139404
- WO-A1-2022/203799

## Description

The present invention relates to cyclodextrins as part of a silicone composition and their use to form articles for absorption, encapsulation and delivery of actives and other compounds. Example of such articles could be transdermal patches, pressure sensitive adhesives, medical device, membranes, gels, clothing or other wearable materials, etc. The cyclodextrins should be compatible with the silicone matrix, even without the use of any additional compatibilizers. The invention can be used for various applications including cosmetics, medical, home care, textiles, industrial and others.

The use of silicone-compatible cyclodexrins can be used for applications such as controlled release, delayed or prolonged, release, on-demand release and triggered release of active materials.

### State-of-the-Art

In the state-of-the-art reacting rubber or silicone rubber with modified cyclodextrin is described already.

US 5,391,592 describes silicone elastomers for contact lens application by reacting cyclodextrin (CD) modified with alkenyl groups with SiH containing silicones by hydrosilylation reaction to produce lipophilic CD-silicone polymers. Encapsulation and release of actives from the elastomer is not taught in this patent. Moreover, simply a CD being lipophilic does not necessarily makes it silicone compatible. Thus, the formation of elastomers by using only hydrophilic or lipophilized CD will require special condition such as the use of additional compatibilizer (e.g., solvent, high temperature, etc.). Thus, in examples of '592, toluene is used as a solvent to bring the different components (cyclodextrin and silicone) into the same phase for the hydrosilylation reaction required to produce the elastomeric material for the contact lens. Use of additional solvents will create additional manufacturing cost arising from special handling required as well as environmental and health concern.

US 7,235,186 B2 describes connecting cyclodextrins to silicone through condensation reactions. However, a specific type of cyclodextrins, i.e., CD functionalized with halotriazines, epoxy, amino, vinylsulfonyl, acryloyl- or methacryloyl groups had to be used. The specially functionalized cyclodextrins are expensive. The products from the process will have limited applicability. E.g., they will not be suitable for RTV -2 type rubbers. The presence of some of the functionalities such as nitrogen containing amine or triazine residue also likely will interfere with certain curing methods, e.g., they will interfere with the platinum catalyst used for some rubber curing. There is no mention of the compatibility of the cyclodextrin modified silicone with other silicones. The '186 patent also describes crosslinkable silicone composition based on the organosilicon compounds containing cyclodextrin radicals. The silicone and cyclodextrin modified silicone or silane described there are not expected to be compatible and react in a homogeneous phase. Thus, the crosslinking is preferably carried out in an emulsion form with additional emulsifiers. The presence of additional emulsifiers can adversely affect the desired properties in many applications besides increasing the cost. Also, in many applications the leaching out of emulsifiers creates various problems. The crosslinking is based on condensation reaction and requires a temperature above 100 °C.

Materials Science and Engineering C 28 (2008) 705-715 describes synthesis of silicone bearing β-cyclodextrins, however the synthesis involves multiples steps. β-cyclodextrins were chemically grafted to poly(methylhydrosiloxane) polymer or poly(methylhy-drosiloxane-co-dimethylsiloxane) copolymer through hydrosilylation reaction. The multi-step synthesis includes the regioselec-tive attachment of tosyl group to one of the primary hydroxyls, its conversion into allylic derivative and subsequent acetylation of the remaining hydroxyl groups. The final step consists in grafting the cyclodextrin derivative to silicone polymer by hydrosilylation reaction. The process involves too many steps, and therefore is likely to be expensive and lacks the simplicity needed for industrial production. The monoallyl peracetylated β-cyclodextrin derivative used is not silicone compatible. A large excess of flammable and toxic solvent toluene had to be used as a solvent for chemically binding this cyclodextrin derivative to a silicone polymer. The product is not a crosslinked silicone rubber.

DE4324636 describes modification of alkenyl functional cyclodextrin with hydro-functionalized polysiloxanes through hydrosilylation and immobilization of it into a support material for application in chromatographic separation. Here also, large amount of solvent, such as toluene, had to be used for the reaction between the CD and the hydro-functionalized silicone as the cyclodextrin used is not silicone compatible. CD modified silicones mentioned in this patent are not elastomeric. Use of the material for controlled release of actives is not taught.

CN102019171 describes a solid phase microextraction coating characterized in that the solid phase microextraction coating comprises β-cyclodextrin and polydimethylsiloxane bonded to each other. The suitability of the material for controlled release is not taught.

US9492549 indicates the possible use of cyclodextrin as a hydrophilic component to promote the release of silver salt from an antimicrobial composition comprising alkenyl-and/or alkynyl-Substituted polysiloxane, at least one polysiloxane comprising silicon-bonded hydrogen atoms, and at least one hydrosilylation catalyst. The cyclodextrin is not silicone compatible and not chemically bound and is expected to result in phase separation without the use of any other compatibilizers. The phase separation is likely to lead to poorer properties for the end product.

EP1206290B1 describes pressure sensitive adhesive compositions containing cyclodextrins. Although, it was mentioned that the adhesive could be based on a silicone-gum (which is not the same as a crosslinked silicone polymer), the cyclodextrins used are in the form of hydrocolloid and they are not silicone compatible.

They will need additional compatibilizers if there is a need to make them compatible with silicone.

US6851462B2 describes rubber composition containing a cyclodextrin or a substituted or derivatized cyclodextrin compatible with the rubber. Silicone rubber is not part of the rubbers described. Silicones would provide advantages such as breathability, biocompatibility and reduced trauma for skin adhesion. Compatibility of cyclodextrins with silicone rubber is not taught in this patent; thus, these rubbers lack the beneficial advantages provided by silicones.

US4978532 describes medical grade silicone pressure sensitive adhesive, DHEA and hydroxypropyl-beta-cyclodextrin as a permeation enhancer. The cyclodextrin is not compatible in silicone, and thus expected to result in inhomogeneity in absence of other compatibilizers.

WO 2020/139404 A1 also discloses in its examples 5 and 7 the modification of cyclodextrin with siloxanes.

The homogeneity of a rubber composition is important before and/or after curing because of the easy processability, and proper retainment of desired properties. A heterogeneous mixture is difficult to process as all components are not uniformly distributed. A heterogeneously cured elastomer will have defect points arising from the points or areas of heterogenicity, which will adversely affect its mechanical and other properties. Thus in the state of the art additional compatibilizers and solvents are used to make the composition homogeneous. But this increases the inconvenience, hazard and cost. For example, if organic solvents are used, which are often flammable, special handling environment needs to be ensured. Thus, it is desirable avoiding this.

All the above mentioned prior art, separately or taken together, fails to solve the problem of producing in a simple and efficient manner silicone materials containing cyclodextrin,
The purpose of the present invention thus is to provide a product and a process for encapsulation and controlled release of actives from a silicone matrix (e.g., silicone elastomers, silicone PSA (pressure sensitive adhesive), etc.) that incorporates cyclodextrins and where such cyclodextrin is compatible with the silicone matrix, and where the cyclodextrin cavity is still usable for encapsulation and delivery of various active materials.

The objects of the present invention are silicone compatible cyclodextrins or their derivatives, which are part of a silicone matrix, and the use of such cyclodextrins to encapsulate the actives inside their cavities, and releasing the actives according to the desired need. Such inventive cyclodextrin derivatives are compatible with the silicone matrix and thus the amount of organic solvent can be minimized or avoided.

In order not to make the number of pages in the description of the present invention excessively high, only the preferred embodiments of the individual features are indicated for each component.

A reader skilled in the art should explicitly interpret this type of disclosure as implying that every combination of different degrees of preference is thus explicitly disclosed and explicitly desirable; i.e. any combination both within a single component and also between different components.

The present invention provides a
curable silicone rubber composition comprising
- 20-99.9 weight % of a Silicone Matrix, and
- 0.1-80 weight % of at least one Cyclodextrin (CD) modified by a silylation reaction to comprise silyl groups of the formula
   (1)

   -(OSi(R¹)₃)ₓ (1)

   with the provision that
   R¹ is independently from each other the same or different an alkyl-, alkylene-, aryl- or alkyl-substituted aryl group, carbonyl; and
   x is a number from 1 to 96
- 0 to 50 weight % of at least one active (=guest molecule), always based on the total silicone rubber composition,
with the proviso that all components always sum up to 100 weight %.

Preferred amounts are 50-95 weight % of a Silicone Matrix, and 0.1-60weight % of at least one of such modified Cyclodextrin comprise silyl groups of the formula (1). More preferred 70-95 weight % of a Silicone Matrix, and 0.1-50 weight % of at least one of such Cyclodextrin (CD) comprise silyl groups of the formula (1).

If the silicone rubber composition comprises any active, the amount is preferred from 0.1-50 weight %, more preferred 0.1-30 weight %.

All above mentioned preferred amounts are with the proviso that all components always sum up to 100 weight %.

### Silyl modified cyclodextrin

### In the formula (1)

R¹ as alkyl-group is preferred a methyl-, ethyl-, propyl-, isobutyl-group; more preferred a methyl- and ethyl-group, most preferred methyl-group.

R¹ as alkylene-group is preferred an vinyl-group, propylene-group, isobutylene-group; more preferred an vinyl-group.

R¹ as aryl- or alkyl-substituted aryl-group is preferred a phenyl-group and a toluol-group; more preferred a phenyl-group.

R¹ is preferably selected from methyl, ethyl, vinyl and phenyl.

x is preferably a number from 1-30 and more preferably from 1-24.

The advantage of the present invention is that the inventive cyclodextrins are compatible with the silicone matrix, and thus no appreciable inhomogeneity or phase separation occurs.

The inventive cyclodextrins are compatible to silicone matrix because of the very special modification of cyclodextrins (CD) with short silyl groups (e.g., trimethyl silyl, vinyldimetyl silyl, etc.) which is done by a silylation reaction. Theses modified CDs can be incorporated into a silicone composition by standard mixing techniques, such as, magnetic stirring, homogenizing, speedmixing, etc. at room temperature or in some cases by heating.

In such silylation reaction alcohol groups from the CD are silylated. The process involves the replacement of the proton with e.g. a trialkylsilyl group, typically trimethylsilyl (-SiMe₃). In a typical process the substrate is deprotonated with a suitable strong base like butyl lithium or a Grignard reagent, followed by treatment with a silyl chloride. Preferred silyl chlorides are chlorotrimethylsilane, chlorodimethylvinylsilane and phenyldimethylchlorosilane. Instead of silyl chlorides it is further preferred to use Bis(trimethylsilyl)amin (=Hexamethyldisilazan=HMN) and Bis(vinyldimethylsilyl)amin (VMN).

The following Scheme shows a schematic example of the process making the inventive silicone compatible cyclodextrins by silylation of commercially available cyclodextrins (CD-OH) (like 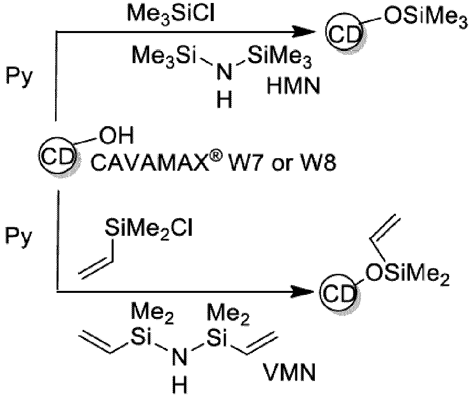 CAVAMAX^{®} W7 or W8, from Wacker Chemie AG, Germany) with trimethylsilyl or vinyldimethylsilyl groups in the presence of pyridine (Py).

Various silyl functional groups can be used for silylation. For example, the silyl groups may contain alkyl, alkenyl, aryl, aralkyl, carbonyl, etc.

The silyl modified cyclodextrin may be present as a non-reactive component (e.g., in case of trimethylsilyl modified CD), or maybe chemically bound to the silicone matrix (e.g., in case of vinyldimethylsilyl modified CD).

### Silicone Matrix

The silicone matrix could be produced by known state of the art standard chemistry used for making such materials, such as RTV-2, RTV-1, those produced by hydrosilylation, radical, anionic, cationic or condensation polymerization, UV or other high energy radiation radiation, thiolene click chemistry, etc.

Although already long known in the prior art, a short description of some of these suitable silicone compositions is given here.

### Addition-crosslinking silicone compositions

Addition-crosslinking silicone compositions have long been known to those skilled in the art. In the simplest case, addition-crosslinking silicone compositions contain at least one organopolysiloxane with at least two aliphatically unsaturated groups in the molecule (e.g. Si-bound vinyl groups), and at least one organohydrogen polysiloxane with two or more SiH groups in the molecule and at least one catalyst promoting the addition of Si-bound hydrogen to aliphatic multiple bonds, which is also described as a hydrosilylation catalyst. The consistency of addition-crosslinking silicone compositions can be adjusted such that HTV (high temperature vulcanizing), LSR (liquid silicone rubber) and also RTV (room temperature vulcanizing) silicon elastomers can be produced. These can be one-, two- or multicomponent compositions.

### Condensation-crosslinking silicone compositions

Condensation-crosslinking silicone compositions have long been known to those skilled in the art. Common examples of condensation-crosslinking silicone compositions bear the designations RTV-1 (1-component) and RTV-2 (2-component). RTV-2 compounds typically contain in one of the components at least one organopolysiloxane with terminal silanol groups and further constituents such as fillers and plasticizers. The second component (the curing agent) contains a crosslinker silane or siloxane in combination with a catalyst accelerating the condensation reaction and optionally further constituents such as plasticizers. As the crosslinker silane or siloxane, the silanes and siloxanes having at least three hydrolyzable residues are mainly used. The condensation-crosslinking RTV-1 compounds which on entry of atmospheric moisture cure to give a silicone elastomer with elimination of a hydrolysis product, are based on the possibility of being able to end-block terminal silanol organopolysiloxanes with a crosslinker containing several hydrolyzable, without at the same time causing crosslinking. As crosslinkers, all silanes having at least three hydrolyzable groups or partial hydrolyzates thereof can be used. In order to achieve a sufficiently high crosslinking rate, most RTV-1 compounds contain a condensation catalyst, for example organotin and organotitanium compounds or metal compounds of main groups I and II.

### Peroxide-induced crosslinking silicone compositions

These compositions have also long been known to those skilled in the art. In the simplest case, peroxide-induced crosslinking silicone compositions contain at least one organopolysiloxane with at least 2 crosslinkable groups per molecule such as for example methyl or vinyl groups and at least one suitable organic peroxide catalyst. They are usually produced as HTV compounds.

### Photo-induced crosslinking silicone compositions

These compositions have also long been known to those skilled in the art. Photo-induced crosslinking silicone compositions contain, depending on the reaction mechanism, at least one photoactivatable initiator or catalyst.

In addition, all the aforesaid silicone compositions according to the invention can contain further additives (W), which were also previously known to be used in their production, such as for example reinforcing filler, non-reinforcing fillers, fungicides, fragrances, rheological additives, corrosion inhibitors, oxidation inhibitors, light stabilizers, heat stabilizers, flame retardants, agents for influencing the electrical properties, dispersant additives, solvents, adhesion promoters, pigments, dyes, plasticizers, organic polymers, solvents, and the like.

Addition curable silicone compositions are preferred as Silicone Matrix.

### Actives

The actives are guest molecules that can be encapsulated inside the cavity of the cyclodextrin molecules (complexed). The guest molecules may include drugs, pharmaceutical products, cosmetic or personal care or wellness actives, biocides, insecticides, fungicides, herbicides, pheromones, fragrances, flavorings, pigments, pharmaceutical active compounds, natural or other oils, antigens, active compounds for antistatic finishing or flame-retardant finishing, stabilizers (UV), dyestuffs, odor causing molecules, etc. or a combination of two or more.

The guest molecule (= actives) could be incorporated into the cyclodextrin before, during or after the formation of the silicone matrix and can be released whenever necessary for end use. The inventive CD can also be used for absorbing molecules such as odor causing compounds and others when desired.

It is not a given that any CD would be still available for encapsulation after the silyl modification as the cavity size and/or shape of the CD can change. But we have found that the complexation of guest molecules and the release can still be achieved from the cured silicone elastomer into which the silylated CDs have been incorporated.

The present invention further provides a method for producing the inventive curable silicone rubber composition by mixing all the compounds by standard mixing techniques such as, magnetic stirring, homogenizing, speedmixing, etc. at room temperature or by heating.

The present invention further provides a silicone product obtainable by filling into a form or applying onto a surface the inventive curable silicone rubber composition and subsequently curing it.

Such inventive silicone product when comprising actives can be used for controlled, delayed, or triggered release of such actives, e.g. in pharmaceutical-, cosmetic-, personal care-, wellness-, room fragrance-, biocides-, insecticides-, fungicides-, herbicides-, textile-applications.

### Inventive silicone product as transdermal controlled release device:

A transdermal patch containing a therapeutic ingredient is constructed by mixing the ingredient with a silylated CD to form a complex, adding the therapeutic ingredient-CD complex to an adhesive elastomer curing Silicone Matrix, drawing a film of the composition and curing to form a cured adhesive film, and combining the film with various other layers commonly found in a transdermal adhesive patch, e.g., a backing layer and a release liner. Combination of various layers of the patch can be done with standard methods used for making such types of patches, e.g., lamination. For use of the patch by the end user, after removing the release liner the patch is applied on the skin and pressure is applied until it sticks. The therapeutic ingredient permeates the skin into the bloodstream in a controlled manner for an extended time period. Appropriate skin permeation enhancers can be used. Such enhancers are already known.

### Inventive silicone product as an insect repellant band:

An appropriate silylated CD can be mixed with an insect repellant ingredient (e.g., DEET) to form a complex. The complex is incorporated into the curable Silicone Matrix used for making a wearable insect repellant band. After manufacture of the band, the insect repellant ingredient releases from the band for an extended period thus providing longer protection for the user.

### Inventive silicone product as a wearable cosmetic face mask:

A wearable antiaging face lift mask may be constructed by forming a complex between a silylated CD and an antiaging active (e.g., retinol, glycolic acid, etc.), mixing the complex with an RTV-2 type curable Silicone Matrix and molding the formulation in the form of a face mask. During the use of the face mask by the consumer, the complex slowly releases the antiaging active over an extended time period thus providing better potency of the active. Such method can also be used to construct an under-eye patch to remove wrinkles.

### Inventive silicone product with triggered release:

An active material can be complexed with a silyl modified CD. The complex can be incorporated into a Silicone <matrix, and a device (e.g., a transdermal or topical patch) can be fabricated with the silicone material. The silicone material, for example, can be part of the adhesive component of a patch. With the application of an appropriate trigger, the CD-active complex breaks and releases the active. The trigger, for example, can be human body heat (normal or elevated human body temperature), body exudates e.g., sweat, moisture, pH, mechanical force (e.g., rubbing, chemical agent, other external stimulators (e.g., light, blow drier), water, heat, electricity; chemical agents, and combinations thereof.

One example of triggered release can be where the release is triggered by heat generated by the use of a super cooled solution in the patch. The super cooled solution can start solidifying and generate heat. The solidification process can be initiated by an activator such as by using activating crystals as described in US 6,103,139. The heat generated this way can cause decomplexation of the silyl-CD-active complex and release the active ingredient. Another example of triggered release could be by the use of a chemical agent that would bind more strongly with the silyl-CD and replace the original guest molecule causing its release.

### Inventive silicone product with triggered release by chemical warming method:

An air-activated chemical warming mechanism based on oxidation of a substance can be used for decomplexation of silyl-CD-active complex and release the active ingredient. Such heating mechanism is described in US 2013/0006337 A1. A mixture of iron powder, salt, water, activated charcoal, and an absorbent material is used, wherein oxygen reacts with the iron powder and this oxidation reaction releases heat. The heat generation by oxidation of iron powder is used in many hand warmers available in the market, but in our invention, this principle can be used for release of active ingredients from silyl-CD-active complex.

### Inventive silicone product with triggered release by an external heating device:

One example of triggered release can be where the release is triggered by heat generated by an external heating device such as a hand-held heating device operated by batter or electricity, for example, as described in US2006/0142750A1.

Such inventive silicone product when not comprising actives can be used in applications for capturing of unwanted agents.

### Inventive silicone product for capture of unwanted agents by silyl-CD:

The silicone compatible CDs can be used to capture undesired chemical agents. For example, a silyl CD can be incorporated in a silicone elastomer matrix. During the process or the use of the elastomer in a device, the cyclodextrin component can trap unwanted chemical agents. For example, during the curing of the elastomer, the silyl-CD can complex a catalyst poison that would otherwise adversely affect the curing process. Another example is, during the use of a cured silicone material (for example as a film), the cavity of the silyl-CD, which was initially empty, can bind odor causing molecules.

The following examples describe the in-principle performance of the present invention, but without restricting the invention to the contents disclosed therein.

In the following examples, all parts and percentages specified are, unless indicated otherwise, by weight. Unless indicated otherwise, the following examples are carried out at a pressure of the ambient atmosphere, i.e. at about 1000 hPa, and at room temperature, i.e. about 20°C, or a temperature which is established on combining the reactants at room temperature without additional heating or cooling.

### Examples

General Conditions for preparation of silicone compatible cyclodextrins: a 4-necked round-bottomed flask, equipped with various neck adapters and stopcock-equipped bypass adapter to accommodate a mechanical stirrer, thermocouple, addition funnel, water condenser, nitrogen gas inlet and outlet, and rubber septum was used for synthesis of silylated cyclodextrins. A heating mantle was used for heating the flask. All glassware was pre-dried in an oven at 125 °C for at least 4 h and cooled to room temperature before use. An electronic thermostat was used in conjunction with the thermocouple to control heating of the flask and contents. The preparation was conducted under a mild flow of dry nitrogen gas. Vacuum distillation was done in a rotary evaporator equipped with a dry ice condenser. Filtration was done either by a standard gravity filtration technique or a vacuum filtration technique using a Buchner funnel.

Cyclodextrin, either β-cyclodextrin (WACKER CAVAMAX^{®} W7), or γ-cyclodextrin (WACKER CAVAMAX^{®} W8), was pre-dried as follows, to remove absorbed moisture from the solid powder. The cyclodextrin is placed in a crystallization dish inside an oven heated to 100 °C for 16 h. The dish is then removed from the oven and placed into a desiccator, which has a bottom lined with phosphorus pentoxide (P2O5) powder, and allowed to cool to room temperature.

### Synthesis of trimethylsilyl β-cyclodextrin CH62:

β-cyclodextrin (60.0 g, 0.0529 mol) is gradually added to a 1 L four-necked glass flask containing 600 g (7.59 mol) of anhydrous pyridine, with continuous stirring at 200 rpm. This mixture is then left to stir for 30 min to evenly disperse the cyclodextrin. A slightly yellow and translucent dispersion results with no large, distinguishable solid particles. 71.7 g (0.444 mol) of bis(trimethylsilyl)amine (also known as hexamethyldisilazane or HMN), is then added to the dispersion, creating an off-white, turbid, and gelatinous slurry. To this slurry 48.2 g (0.444 mol) of chlorotrimethylsilane is added dropwise via a glass addition funnel. Addition of the chlorotrimethylsilane transforms the slurry into an opaque, white dispersion. An exotherm is noted immediately after addition of the chlorotrimethylsilane. The reactor atmosphere is bubbled through a 3.7 wt.% solution of hydrochloric acid in water, and continually replaced by a blanket of nitrogen to remove any ammonia that could be generated and drive the reaction to completion.

The dispersion is left to stir for an additional 65 min after the conclusion of the addition of the chlorotrimethylsilane. The solvent is distilled off under vacuum until an off-white paste remains. The paste is then mixed using magnetic stirring with 375 mL of n-heptanes for at least 30 min. The solids are filtered out of the mixture, and the clear, colorless filtrate is distilled under vacuum to remove the solvent until a solid foam forms. The solid foam is then chilled in a freezer set to -30 °C, crushed into fine grains and dried in a vacuum oven at 55 °C. The grains are cooled to room temperature and, and then crushed to a fine powder with a mortar and pestle to yield 112.7 g of white, fine powder. 1HNMR, Mass spectroscopy and SEC confirm the product to be a substituted cyclodextrin with 17.5 trimethylsilyl (TMS) groups and 3.5 OH groups on average.

### Synthesis of trimethylsilyl γ-cyclodextrin CH48-2:

γ-cyclodextrin (60.0 g, 0.0463 mol) is gradually added to a 1 L four-necked glass flask containing 600 g (7.59 mol) of anhydrous pyridine, with continuous stirring at 200 rpm. This mixture is then left to stir for 30 min to evenly disperse the cyclodextrin. A slightly yellow and translucent dispersion resulted with no large, distinguishable solid particles. 70.9 g (0.439 mol) of WACKER SILAZANE HMN, bis(trimethylsilyl)amine, are then added to the dispersion, increasing the turbidity. To this dispersion 50.3 g (0.463 mol) of chlorotrimethylsilane is added dropwise via a glass addition funnel. Addition of the chlorotrimethylsilane forms an opaque, white dispersion. An exotherm of approximately 20-25 °C is noted immediately after addition of the chlorotrimethylsilane. The reactor atmosphere is bubbled through a 3.7 wt.% solution of hydrochloric acid in water, and continually replaced by a blanket of nitrogen to remove any ammonia that could be generated and drive the reaction to completion.

The dispersion is left to stir for an additional 65 min after the conclusion of the addition of the chlorotrimethylsilane. The solvent is distilled off under vacuum until an off-white paste remains. The paste is then mixed using magnetic stirring with 375 mL of n-heptanes for at least 30 min. The solids are filtered out of the mixture, and the clear, colorless filtrate is distilled under vacuum until a solid foam forms. The solid foam is then chilled in a freezer set to -30 °C, crushed into fine grains and dried in a vacuum oven at 55 °C for 16 h. The grains are cooled to room temperature, and then crushed to a fine powder with a mortar and pestle to yield 125.8 g of white, fine powder. 1 HNMR, Mass spectroscopy and SEC confirm the product to be a substituted cyclodextrin with 21.5 TMS groups and 2.5 OH groups on average.

### Synthesis of vinyldimethylsilyl β-cyclodextrin CH70-2:

β-cyclodextrin (35.0 g, 0.0308 mol) is gradually added to a 1 L four-necked glass flask containing 375 g (4.74 mol)of anhydrous pyridine, with continuous stirring at 200 rpm. This mixture is then left to stir for 30 min to evenly disperse the cyclodextrin.

A slightly yellow and translucent dispersion results with no large, distinguishable solid particles. 42.0 g (0.227 mol) of WACKER SILAZANE VMN, bis(dimethylvinylsilyl)amine (also known as 1,1,3,3-tetramethyl-1,3-divinyldisilazane, or VMN), and 27.3 g (0.226 mol) chlorodimethylvinylsilane are then charged into separate addition funnels. Approximately 10-15% of the Bis(dimethylvinylsilyl)amine is then added dropwise (for approximately one minute), at which point dropwise addition of the chlorodimethylvinylsilane is started. Dropwise addition of both reagents continues simultaneously until completion. An exotherm is noted immediately after addition of the chlorodimethylvinylsilane. Addition of the silylating agents results in the formation of an opaque, off-white dispersion. The reactor atmosphere is bubbled through a 3.7 wt.% solution of hydrochloric acid in water, and continually replaced by a blanket of nitrogen to remove any ammonia that could be generated and drive the reaction to completion.

The dispersion is left to stir for an additional 65 min after the conclusion of the addition of the silylating agents. The solvent is distilled off under vacuum until an off-white paste remains. The paste is then mixed using magnetic stirring with 375 mL of n-heptanes for at least 30 min. The solids are filtered out of the mixture, and the clear, colorless filtrate is distilled under vacuum until a solid foam forms. The solid foam is then chilled in a freezer set to -30 °C, crushed into fine grains and dried in a vacuum oven at 60 °C for 16 h. The grains are cooled to room temperature, and then crushed to a fine powder with a mortar and pestle to yield 68.0 g of white, fine powder. 1HNMR, mass spectroscopy and SEC confirm the product to be a substituted cyclodextrin with 17.3 VDMS and 3.7 OH groups on average.

### Synthesis of dimethylvinylsilyl γ-cyclodextrin CH61:

γ-cyclodextrin (60.0 g (0.0463 mol) is gradually added to a 1 L four-necked glass flask containing 600 g (7.59 mol) of anhydrous pyridine, with continuous stirring at 200 rpm. This mixture is then left to stir for 30 min to evenly disperse the cyclodextrin. A slightly yellow and translucent dispersion results with no large, distinguishable solid particles. 81.5 g (0.440 mol) of WACKER SILAZANE VMN, bis (dimethylvinylsilyl)amine, are then added to the dispersion, increasing the turbidity. To this dispersion 55.8 g (0.462 mol) of chlorodimethylvinylsilane are added dropwise via a glass addition funnel. Addition of the chlorodimethylvinylsilane forms an opaque, white dispersion. An exotherm is noted immediately after addition of the chlorodimethylvinylsilane. The reactor atmosphere is bubbled through a 3.7 wt.% solution of hydrochloric acid in water, and continually replaced by a blanket of nitrogen to remove any ammonia that could be generated and drive the reaction to completion.

The dispersion is left to stir for an additional 65 min after the conclusion of the addition of the silylating agents. The solvent is distilled off under vacuum until an off-white paste remains. The paste is then mixed using magnetic stirring with 375 mL of n-heptanes for at least 30 min. The solids are filtered out of the mixture, and the clear, colorless filtrate is distilled under vacuum until a solid foam forms. The solid foam is then chilled in a freezer set to -30 °C, crushed into fine grains and dried in a vacuum oven at 55 °C for 16 h. The grains are cooled to room temperature, and then crushed to a fine powder with a mortar and pestle to yield 149.0 g of white, fine powder. 1HNMR, mass spectroscopy and SEC confirms the product to be a substituted cyclodextrin with 21.8 VDMS groups and 2.2 OH groups on average.

### Synthesis of trimethylsilyl-vinyldimethylsilyl β-cyclodextrin CH74:

β-cyclodextrin (20.0 g, 0.0176 mol) is gradually added to a 500 mL four-necked glass flask containing 250 g (3.16 mol) of anhydrous pyridine, with continuous stirring at 200 rpm. This mixture is then left to stir for 30 min to evenly disperse the cyclodextrin. A slightly yellow and translucent dispersion results with no large, distinguishable solid particles. 20.9 g (0.129 mol) of WACKER SILAZANE HMN, bis(trimethylsilyl)amine is charged into a glass addition funnel, and 4.46 g (0.0370 mol) of chlorodimethylvinylsilane and 10.1 g (0.0930 mol) of chlorotrimethylsilane are charged together into another glass addition funnel. Bis(trimethylsilyl)amine is added dropwise for approximately two minutes, and then dropwise addition of the two chlorosilanes is initiated. Dropwise addition of the silylating agents is continued simultaneously until both feeds have completed. An exotherm is noted immediately after addition of the chlorosilanes. The reactor atmosphere is bubbled through a 3.7 wt.% solution of hydrochloric acid in water, and continually replaced by a blanket of nitrogen to remove any ammonia that could be generated and drive the reaction to completion.

The dispersion is left to stir for an additional 65 min after the conclusion of the addition of the silylating agents. The solvent is distilled off under vacuum until an off-white paste remains. The paste is then mixed using magnetic stirring with 375 mL of n-heptanes for at least 30 min. The solids are filtered out of the mixture, and the clear, colorless filtrate is distilled under vacuum until a waxy solid form. The waxy solid is dried at 70 °C in a vacuum oven for 16 h to generate solid chunks, which are crushed into fine grans and dried for additionial 6 h under the same condition. The grains are cooled to room temperature, and then crushed with a mortar and pestle to yield 37.8 g of white, fine powder. 1 HNMR, mass spectroscopy and SEC confirms the product to be a substituted cyclodextrin with 15.2 TMS, 1.4 VDMS and 4.4 OH groups on average.

### Synthesis of trimethylsilyl-vinyldimethylsilyl γ-cyclodextrin CH85

γ-cyclodextrin (20.0 g, 0.0154 mol is gradually added to a 500 mL four-necked glass flask containing 200 g (2.53 mol) of anhydrous pyridine, with continuous stirring at 200 rpm. This mixture is then left to stir for 30 min to evenly disperse the cyclodextrin. A slightly yellow and translucent dispersion results with no large, distinguishable solid particles.

20.9 g (0.129 mol) of WACKER SILAZANE HMN, bis(trimethylsilyl)amine, is charged into a glass addition funnel, and 3.91 g (0.0324 mol) of chlorodimethylvinylsilane and 10.6 g (0.0976 mol) of chlorotrimethylsilane are charged together into another glass addition funnel. Bis(trimethylsilyl)amine is added dropwise for about two minutes, and then dropwise addition of the chlorosilanes is initiated. Dropwise addition of the silylating agents is continued simultaneously until both feeds have completed. An exotherm is noted immediately after addition of the chlorosilanes. The reactor atmosphere is bubbled through a 3.7 wt.% solution of hydrochloric acid in water, and continually replaced by a blanket of nitrogen to remove any ammonia that could be generated and drive the reaction to completion.

The dispersion is left to stir for an additional 65 min after the conclusion of the addition of the silylating agents. The solvent is distilled off under vacuum until an off-white paste remains. The paste is then mixed using magnetic stirring with 150 mL of n-heptanes for at least 30 min. The solids are filtered out of the mixture, and the clear, colorless filtrate is distilled under vacuum until a solid foam forms. The solid foam is then crushed into fine grains and dried in a vacuum oven at 65 °C for 16 h. The grains are cooled to room temperature, and then crushed to a fine powder with a mortar and pestle to yield 38.5 g of white, fine powder. 1HNMR, mass spectroscopy and SEC confirms the product to be a substituted cyclodextrin with 18.5 TMS, 1.34 VDMS and 4.16 OH groups on average.

### Synthesis of trimethylsilyl-vinyldimethylsilyl γ-cyclodextrin CH60

γ-cyclodextrin (20.0 g, 0.0154 mol is gradually added to a 500 mL four-necked glass flask containing 200 g (2.53 mol) of anhydrous pyridine, with continuous stirring at 200 rpm. This mixture is then left to stir for 30 min to evenly disperse the cyclodextrin. A slightly yellow and translucent dispersion results with no large, distinguishable solid particles. The mixture is cooled in an ice bath.

To the cooled stirring mixture, 23.7 g (0.146 mol) of WACKER SILAZANE HMN, bis(trimethylsilyl)amine, is added slowly with a glass addition funnel. Then 18.93 g (0.157 mol) of chlorodimethylvinylsilane is added dropwise with the addition funnel. An exotherm is noted immediately after addition of the chlorosilanes. The reactor atmosphere is bubbled through a 3.7 wt.% solution of hydrochloric acid in water, and continually replaced by a blanket of nitrogen to remove any ammonia that could be generated and drive the reaction to completion.

After the conclusion of the addition of the silylating agents, the ice bath is removed, and the dispersion is left to stir for an additional 65 min. The solvent is distilled off under vacuum until an off-white paste remains. The paste is then mixed using magnetic stirring with 100 mL of n-heptanes for at least 30 min. The solids are filtered out of the mixture, and the clear, colorless filtrate is distilled under vacuum until a solid form. The solid is crushed and dried in a vacuum oven at 55 °C for 16 h to obtain 39.0 g of a white crispy solid. 1HNMR, mass spectroscopy and SEC confirm the product to be a substituted γ-cyclodextrin with 14.9 TMS, 8.1 VDMS and 1.0 OH groups on average.

### Synthesis of trimethylsilyl-phenyldimethylsilyl β-cyclodextrin CH86

A silyl modified CD was synthesized by a procedure similar to CH74 by using 18.0 g β-CD, 233.5 g pyridine, 9.4 g bis(trimethylsilyl)amine (HMN) and 39.8 g of phenyldimethylchlorosilane. The purification procedure was slightly different than CH74. After distilling off the solvent under vacuum, the residue was extracted with n-heptane and filtered. The filtrate heptane solution was washed with equal volume of methanol, containing a few drops of brine, three times in a separatory funnel. The heptane layer was collected from the bottom of the separatory funnel, the heptane was evaporated using a rotary evaporator and the residue was dried in a vacuum oven to get a solid that was crushed into a white dry powder (38.0 g). 1HNMR, mass spectroscopy and SEC confirmed the product to be a substituted cyclodextrin with 7.9 TMS, 9.5 PhDMS (phenyldimethylsilyl) and 3.6 OH groups on average.

### Synthesis of vinyldimethylsilyl-phenyldimethylsilyl β-cyclodextrin CH87

A silyl modified CD was synthesized by a procedure similar to CH86 by using 20.1 g β-CD, 234.0 g pyridine, 24.1 g bis(vinyldimethylsilyl) amine (VMN) and 22.1 g of phenyldimethylchlorosilane. The product was obtained as 33.0 g white, dry powder. 1HNMR, mass spectroscopy and SEC confirmed the product to be a substituted cyclodextrin with 11.2 VDMS, 5.1 PhDMS and 4.7 OH groups on average.

### Synthesis of trimethylsilyl-phenylpropyldimethylsilyl β-cyclodextrin CH88

A silyl modified CD was synthesized by a procedure similar to CH86 by using 18.1 g β-CD, 233.2 g pyridine, 9.4 g bis(trimethylsilyl)amine (HMN) and 49.7 g of 3-phenylpropyl)dimethylchlorosilane. The product was obtained as 45.6 g colorless viscous liquid. 1HNMR, mass spectroscopy and SEC confirmed the product to be a substituted cyclodextrin with 8.4 TMS, 7.8 PhPrDMS (dimethyl(3-phenylpropyl)silyl) and 4.8 OH groups on average.

### Synthesis of trimethylsilyl-vinyldimethylsilyl β-cyclodextrin CH77, having low silyl substitution:

A silyl modified CD was synthesized by a procedure similar to CH74 by using 25.0 g β-CD, 300.7 g pyridine, 18.7 g Bis(trimethylsilyl)amine (HMN) and 11.2 g of chlorodimethylvinylsilane. The product was obtained as 41.0 g white crispy powder. 1HNMR, mass spectroscopy and SEC confirms the product to be a substituted cyclodextrin with 8.0 TMS, 3.2 VDMS and 9.8 OH groups on average. Thus approximately 53% of the total OH groups on average are and 47% OH groups on average are still underivatized in this silylated CD. In this case smaller relative amount of silylating agents were used resulting in relatively low degree of silylation.

A summary of examples of various silylated CDs are shown in the table 1.

**Table 1:**

| Silyl-CD | Type | Average number of silyl groups | | | | Total average number of silyl groups |
|---|---|---|---|---|---|---|
| | | VDMS¹ | TMS² | PhDMS³ | PhPrDMS⁴ | |
| CH62 | β | 0 | 17.5 | 0 | 0 | 17.5 |
| CH48-2 | γ | 0 | 21.5 | 0 | 0 | 21.5 |
| CH70-2 | β | 17.3 | 0 | 0 | 0 | 17.3 |
| CH61 | γ | 21.8 | 0 | 0 | 0 | 21.8 |
| CH74 | β | 1.4 | 15.2 | 0 | 0 | 16.6 |
| CH85 | γ | 1.3 | 18.5 | 0 | 0 | 19.8 |
| CH60 | γ | 8.1 | 14.9 | 0 | 0 | 23.0 |
| CH77 | β | 3.2 | 8.0 | 0 | 0 | 11.2 |
| CH70 | β | 17.9 | 0 | 0 | 0 | 17.9 |
| CH68 | β | 5.4 | 11.2 | 0 | 0 | 16.6 |
| CH86 | β | 0 | 7.9 | 9.5 | 0 | 17.4 |
| CH87 | β | 11.2 | 0 | 5.1 | 0 | 16.3 |
| CH88 | β | 0 | 8.4 | 0 | 7.8 | 16.2 |
| MG15 | β | 3.0 | 11.5 | 0 | 0 | 14.5 |

| | | | | | | |
|---|---|---|---|---|---|---|
| ¹ Vinyldimethylsilyl ² Trimethylsilyl ³ Dimethylphenylsilyl ⁴ Dimethyl(3-phenylpropyl)silyl | | | | | | |

Although the examples shown are only of β- and γ-cyclodextrins, similar silylated cyclodextrins can be made based on α-cyclodextrins as well.

### Examples for solubility of silylated cyclodextrins in silicones:

Silylated cyclodextrin CH60 (0.5 g) was mixed with 4.5 g of BELSIL^{®} DM 5 (a trimethylsilyl endcapped linear polydimethyl siloxane of 5 mPa.s viscosity) in a vortex mixer, thus generating a 10 wt.% mixture. A clear, homogeneous, transparent solution formed. Such a homogneous mixture can also be formed by using a magnetic stirrer, overhead stirrer, SpeedmixerTM or similar mixing techniques.

A similar experiment with silylated cyclodextrin CH70 shows a solubility at 25wt% level of CD in DM5. A clear, homogeneous, transparent solution formed.

### Comparative Solubility Example 1:

Above experiment was repeated with a native γ-CD CAVAMAX^{®} W8, which was not modified with silylation. The resultant mixture was heterogeneous and opaque, with gross phase separation.

### Comparative Solubility Example 2 (solubility of permethylated β-cyclodextrin) :

A permethylated β-cyclodextrin, in which all of the OH groups are derivatized to OMe groups, but which does not have any silyl modification, was purchased from Sigma Aldrich.0.5 g permethylated β-CD was mixed with 4.5 g DM 5 in a vortex mixer, thus generating a 10 wt.% mixture. The mixture was heterogeneous and opaque. This example shows that hydrocarbon (methyl in this case) substitution is not enough to make the CD compatible with silicone, as the resultant mixture was heterogeneous and opaque, with gross phase separation.

### Comparative solubility example 3 (solubility of silylated cyclodextrin with low degree of silylation):

Silylated β-cyclodextrin CH77 with low number of silyl groups (7.95 TMS and 3.23 VDMS groups on average) was evaluated to check the solubility in DM 5 at 10 wt.%. This CD was found to be insoluble in DM 5.

### Experimental examples for preparation of silicone elastomers with silylated cyclodextrins:

### Experimental example for elastomer CH95-70

0.802 g (0.304 mmol) CH70, dimethylvinylsilyl-β-cyclodextrin, and 52.0 g of a silicon hydride terminated polydimethylsiloxane fluid with a viscosity of approx. 1000 mPa.s, are placed in a suitable plastic cup with a lid along with a magnetic stir bar. The cup is blanketed with nitrogen gas and then closed to maintain an inert atmosphere while stirring. The materials are stirred until the cyclodextrin is fully dissolved. To this solution, 22.9 g of a vinyl terminated polydimethylsiloxane fluid with a viscosity of approx. 100,000 mPa.s, are added and the contents of the plastic cup are hand-mixed with a stirring rod. 0.0757 g of a platinum catalyst solution, divinyl tetramethyl disiloxane platinum complex diluted in vinyl terminated polysiloxane (1% w/w Pt content), are added to the mixture and hand-mixed, followed by further mixing in a FlackTek, Inc. SpeedmixerTM, model DAC 1100.2 VAC, at 1250 rpm for 1 minute under vacuum (95 mbar pressure, to degas the mixture).

The composition is then placed into a "plate and frame" mold lined with a suitable release liner. The composition and mold are put into an oven preheated at 80 °C for 1 h to cure into a rubber slab produced are approximately 6 in X 6 in X 0.072 in. The cured elastomer specimen is clear and colorless.

### Experimental example for elastomer CH95-60

An elastomeric slab is produced from trimethylsilyl-vinyldimethylsilyl γ-cyclodextrin CH60, a silicon hydride terminated polydimethylsiloxane fluid with a viscosity of approx. 1000 mPa.s, and a vinyl terminated polydimethylsiloxane fluid with a viscosity of approximately 100,000 mPa.s, with platinum catalyst solution. Procedure is analogous to CH95-70. The slab is clear and colorless.

### Experimental example for elastomer CH95-85

An elastomeric slab is produced from trimethylsilyl-vinyldimethylsilyl γ-cyclodextrin CH85, a silicon hydride terminated polydimethylsiloxane fluid with a viscosity of approx. 1000 mPa.s, and a vinyl terminated polydimethylsiloxane fluid with a viscosity of approximately 100,000 mPa.s, with a platinum catalyst solution. Procedure is similar to CH95-70. Table 2 shows the examples of elastomer curing with silylated cyclodextrins.

**Table 2**

| Example | CH95-70 | CH95-60 | CH95-85 |
|---|---|---|---|
| SiH functional silicone/ amount (g) | H- (SiMe₂O) _{~220} SiMe₂-H, visc. ~1000 mPa.s/52.0 | H- (SiMe₂O) _{~220} SiMe₂-H, visc. ~1000 mPa.s/51.0 | H- (SiMe₂O) _{~220} SiMe₂-H, visc. ~1000 mPa.s/47.0 |
| | | | |
| Silylated CD/ amount (g) | CH70¹/0.802 | CH60²/2.03 | CH85/7.99 |
| Type of silylated CD | dimethylvinylsilyl β-cyclodextrin | dimethylvinylsilyl, trimethylsilyl γ-cγ-clodextrin | dimethylvinylsilyl, trimethylsilyl γ-cγ-clodextrin |
| Stirring time with CD | 24 h | 16 h | 5 d |
| Vinyl siloxane component/ amount (g) | M^{Vi} DₓM^{Vi}, visc. ~100000 mPa.s/ 22.9 | M^{Vi} DₓM^{Vi}, visc. ~100000 mPa.s/ 22.4 | M^{Vi} DₓM^{Vi}, visc. ~100000 mPa.s / 20.7 |
| SiH:Vi mole ratios | 1:1 | 1:1 | 1:1 |
| Vi from CD: Vinyl from silicone mole ratio | 0.1:0.9 | 0.1:0.9 | 0.1:0.9 |
| Platinum Catalyst solution*⁵ (mg) | 75.7 | 75.5 | 75.7 |
| Cure conditions | 80 °C, 1 h | 80 °C, 1 h | 80 °C, 1 h |
| Product appearance | Colorless, transparent, cured | Colorless, transparent, cured | Colorless, transparent, cured |

| | | | |
|---|---|---|---|
| ^{*5} divinyl tetramethyl disiloxane platinum complex diluted in vinyl terminated polysiloxane (1% w/w Pt content). | | | |

### Comparison of cured elastomers incorporating silylated CD and that incorporating non-silylated CDs:

A cured elastomer sample was prepared by using a silylated cylodextrin, dimethylvinylsilyl-trimethylsilyl-β-cyclodextrin CH68, which has on average 11.2 TMS, 5.4 VDMS and 4.4 OH groups, a silicon hydride terminated polydimethylsiloxane fluid with a viscosity of approx. 1000 mPa.s, and a vinyl terminated polydimethylsiloxane fluid with a viscosity of approximately 100,000 mPa.s, with platinum catalyst solution. Procedure is analogous to CH95-70. Another elastomer sample was prepared by using the same recipe but replacing the silyl β-cyclodextrin CH68 with native β-cyclodextrin CAVAMAX^{®} W7. A third sample was prepared by the same method but by replacing the silyl β-cyclodextrin CH68 with permethylated β-cyclodextrin. The sample with silylated CD CH68 was transparent and homogeneous whereas the two comparative samples were heterogeneous, opaque, with large domain separations.

### Examples of complexation of guest molecules by silyl cyclodextrins

The silyl CDs are suitable for binding many guest molecules inside their cavities. The CD-guest complex can be formed by various methods that are commonly used for making cyclodextrin complexes, such as, grinding, kneading, precipitation, solvent evaporation, freeze-drying, etc. The complexation of guest molecules can be verified by standard methods available in the literature, such as visual change in appearance, differential scanning calorimetry (DSC), thermogravimetric analysis (TGA, nuclear magnetic resonance (NMR), infrared spectroscopy (IR), X-ray diffraction etc.

### Complexation of Adamantane by a silyl CD:

The ability of silylated CDs for complexing adamantane as a guest molecule was shown by differential scanning calorimetry (DSC). Uncomplexed adamantane typically exhibits a thermal event corresponding to a solid- solid (polymorphic) transition enthalpy from face-centered cubic to a body-centered tetragonal lattice. This event appears in crystalline solid samples of adamantane but will not appear if individual molecules of adamantane are isolated from each other due to being bound individually into CD cavities. The absence of this thermal event would therefore indicate inclusion of adamantane into the CD cavity.

### Complexation of adamantane by CD itself:

Complexation was performed by mixing a 1:1 molar ratio of a silyl-β-CD VP31-2, having 15.3 vinylsilyl groups on average, with adamantane in a 50 wt% solution of toluene for 1 h at 60 °C. The complex (MG3) was isolated by removing the toluene using a vacuum oven.

### Complexation between silyl-CD and adamantane in a silicone elastomer:

Silyl-CD VP31-2 and adamantane were dissolved at 1:1 molar ratio into toluene, at 50 wt% (1:1 ratio of total mass of the CD and adamantane to the mass of toluene) and stirred at 60 °C for 1 h to form the complex. This solution was then added to an SiH terminated linear PDMS having an average viscosity of approx. 1000 mPa.s (1:1 SiH: vinyl molar ratio) and mixed with a Speed-mixer^{™} (2000 rpm, 2 min). Platinum catalyst solution (same one mentioned in Table 1, 0.1% relative to the total mass of the mixture) was then added to the mixture and mixed with the Speed-mixer^{™} (2000 rpm, 2 min) again before pouring the formulation into an aluminum Petri dish and placing in an oven at 80 °C for 1 h. A clear, colorless and homogeneous elastomer (MG3-1) was obtained.

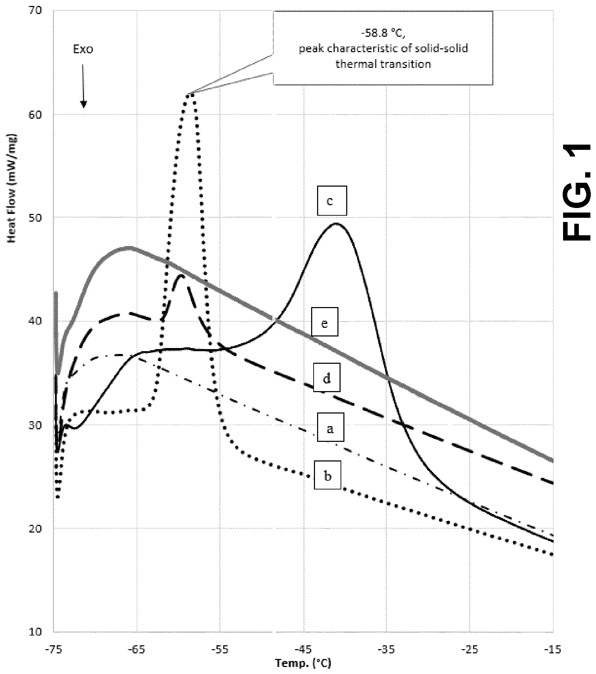

The complex formation was confirmed by DSC experiments. DSC was performed on native adamantane, product from complexation protocol for a 1:1 CD:adamantane (MG3), and the product from complexation protocol for silyl-CD and adamantane in a silicone elastomer product (MG3-1). The results are shown in Figure 1 with DSC Thermogram of (a) silyl-CD VP31-2, (b) adamantane, (c) elastomer MG3-1 containing silyl-CD-adamantane complex, (d) mixture of VP31-2 and adamantane 1:1 without complexation protocol, (e) product from complexation protocol with 1:1 VP31-2 and adamantane (MG3) .

In the experiment, the solid-solid transition is observed for adamantane at approximately - 59 °C (thermogram b). This thermal event from adamantane does not appear in thermogram e (product from complexation experiment with 1:1 CD:adamantane), nor in c (elastomer incorporating the product MG3 from CD and adamantane complexation protocol). Because MG3 is a starting material for the elastomer MG3-1, the results show that adamantane is successfully complexed after the complexation protocol, and that this complex remains intact even in the elastomer.

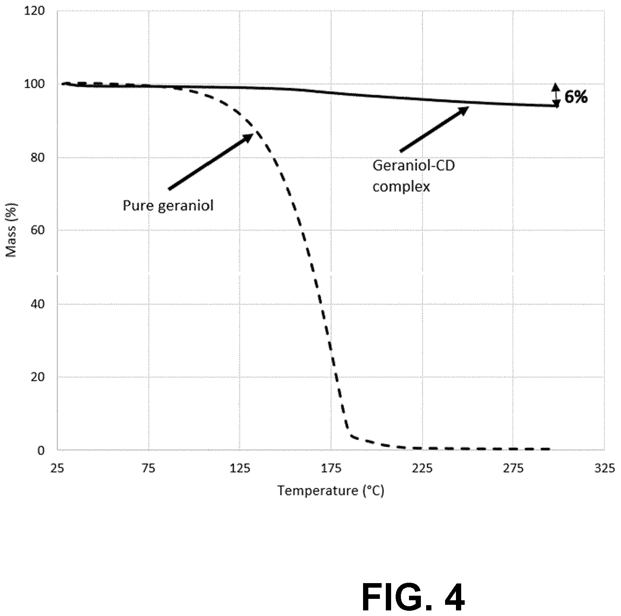

To confirm that uncomplexed adamantane would be detected using this method, a physical mixture (without complexation procedure) was prepared with a 1:1 ratio of silyl-CD VP31-2 and adamantane (DSC result shown in thermogram d). It is clear from Figure 4 that these uncomplexed amount of adamantane is detectable using this method (characteristic peak observed for thermograms d).

### Example of complexation between a silyl-CD and Geraniol

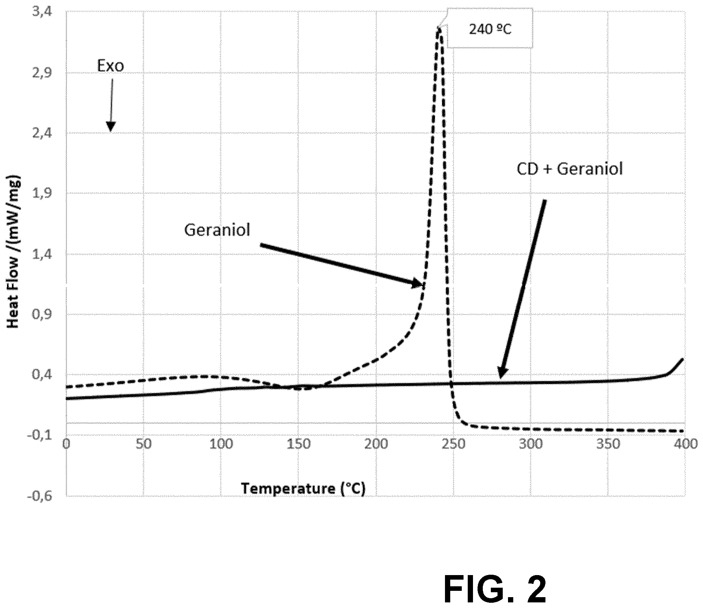

Trimethylsilyl-β-cyclodextrin CH62 (1.416 g, 0.59 mmol) was weighed and placed in a mortar, and then geraniol (0.09100 g, 0.59 mmol) was added to the TMS-β-CD and ground with a pestle for 15 minutes. The mixture was checked for isolated chunks of solid and the grinding continued until no chunks were observed. Complexation was confirmed by DSC analysis (Figure 2).

The endothermic peak at approximately 240 °C of pure geraniol indicates its boiling point. The disappearance of the peak confirms the complex formation for the CD-Geraniol combination.

Similar experiments with other actives were performed, and complex formation was confirmed by DSC.

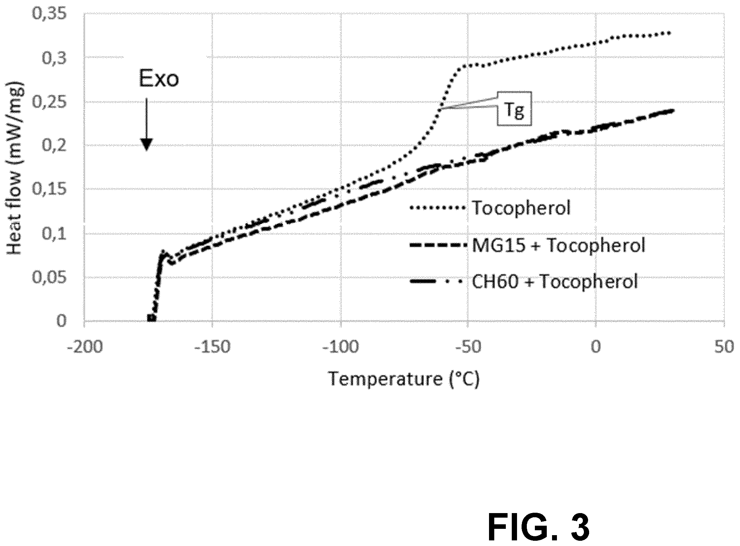

DSC thermograms for 2:1 combinations of α-tocopherol with VDMS-TMS-β-CD MG 15 and VDMS-TMS-γ-CD CH60 are shown in Figure 3.

The plot for pure α-tocopherol shows a glass transition temperature (Tg) at ~ -61 °C. The complete disappearance of this peak for both the combinations with TMS-β-CD MG 15 or TMS-γ-CD CH60 confirms that both CDs form complexes with α-tocopherol.

### Example of complexation between a silyl-CD and salicylic acid:

Trimethylsilyl-β-cyclodextrin CH62 (1.415g, 0.59 mmol) was weighed and placed in a mortar, and then salicylic acid (0.0815 g, 0.59 mmol) was added to the TMS-β-CD and ground with a pestle for 15 minutes. Approximately 5-7 mL of Ethanol was added to the mixture and the grinding was continued for another 15 min. The mixture was placed in a small flask and ethanol was evaporated by placing the mixture in an oven at 90°C. Complexation was confirmed by optical microscopy analysis.

The microscopy images show distinct crystalline phase for the complex, which is different from the original crystalline phase of the salicylic acid or the non-crystalline powder mixture of a physical blend.

Various examples for complexation between silyl-CDs and various guest molecules are shown in table 3.

**Table 3**

| Trial | Silyl-CD | Guest | CD: guest mole ratio | Guest wt.% |
|---|---|---|---|---|
| MG17-1 | MG15 | R-limonene | 1:1 | 6.18 |
| MG17-2A | MG15 | curcumin | 2:1 | 7.54 |
| MG17-2B | CH60 | curcumin | 2:1 | 6.88 |
| MG17-3A | MG15 | α-tocopherol | 2:1 | 8.71 |
| MG17-3B | CH60 | α-tocopherol | 2:1 | 8.07 |
| MG17-7 | MG15 | α-pinene | 1:1 | 6.10 |
| VP147-1 | CH62 | geraniol | 1:1 | 6.04 |
| VP147-2 | CH62 | geraniol | 1:2 | 11.40 |
| VP147-3 | CH62 | geraniol | 1:4 | 20.46 |
| VP149-1 | MG15 | retinol | 2:1 | 6.35 |
| VP149-2 | CH60 | retinol | 2:1 | 4.69 |
| VP176-2 | CH62 | salicylic acid | 1:1 | 1.25 |

Complex formation provides advantage for practical use of these guest molecules, many of which are pharmaceutical or cosmetic actives. For example, complexation slows down the evaporation of actives making the actives last longer. This is confirmed by Thermogravimetric analysis (TGA). Thermogravimetric analysis results for pure geraniol and its 1:1 complex with trimethylsilyl-β-cyclodextrin CH62 are shown in Figure 4.

The complex with TMS-β-CD CH62 contains approximately 6 wt.% Geraniol. Pure Geraniol starts evaporating at approximately 75 °C and completely evaporates at approximately 225 °C. In the complex, the evaporation does not start until approximately 110 °C and continues slowly until approximately 300 °C. Thus, complexation with silyl-CD slows down loss of geraniol.

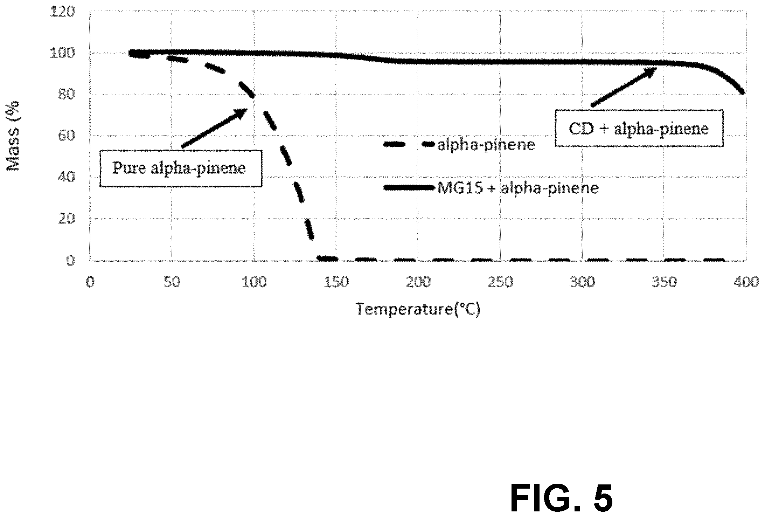

In Figure 5 TGA thermograms show similar observations for complexation between a silyl-CD MG 15 and alpha-pinene 1:1 compared with pure alpha-pinene.

As can be seen from the TGA results, onset of weight loss of pure pinene due to evaporation starts at approximately room temperature (<30 °C). This onset significantly increases to ~135 °C for the pinene-CD combination. Pure pinene completely evaporates by 140 °C., but it takes up to approximately 200 °C for the pinene to completely evaporate from the complex.

The complexes formed between silylated CDs and various guest molecules can be incorporated into elastomers and clear and/or homogeneous formulations resulted for the inventive silicone rubber compositions and the cured inventive silicone products.

A cured non-inventive silicone elastomer product incorporating a complex between native β-CD, which is not silylated, and geraniol is not clear.

In some cases, incorporation of silyl-CD into the elastomer curing composition provides practical advantage for getting a good cure. Some actives may interfere with the catalyst (e.g., platinum) used for curing. Encapsulating the active in silyl-CD prevents the active from poisoning the catalyst. One such example where salicylic acid was used as an active is provided below:
A cured elastomer/CD/salicylic acid sample (VP178-3) containing 1:1 mole ratio of salicylic acid to silyl-CD was prepared by using the following procedure:
SiH terminated linear silicone of approximate formula MHD220MH and approximate viscosity of 1000 mPa.s (1.449 g) and SiH terminated and pendant SiH containing silicone of approximate formula MHD95.5DH9.6MH and having an approximate viscosity of 165 mPa.s (0.045 g) were mixed with a SpeedmixerTM. An inclusion complex between silyl-CD CH62 and salicylic acid (1.057 g, 1:1 molar ratio between CD:salicylic acid), which was prepared by the procedure mentioned before, was added and further mixed with the silicone components until the complex is well-dispersed. Vinyl terminated linear silicone of approximate viscosity 1000 mPa.s (1.981 g) was added and further mixed. Platinum catalyst solution (containing 1% Pt) (0.078 g) was added, and the mixture was further mixed. The mixture was placed in an oven at 120 °C for 1 h to get a cured elastomer.

A control sample (VP178-2), which does not contain any silylated CD, was prepared using the following procedure: SiH terminated linear silicone of approximate formula MHD220MH and approximate viscosity 1000 mPa.s (2.900 g) and an SiH terminated and pendant SiH containing silicone of approximate formula MHD95.5DH9.6MH and having an approximate viscosity of 165 mPa.s (0.090 g) were mixed using SpeedmixerTM. Salicylic acid (0.088 g) was added and further mixed until well-dispersed. Vinyl terminated linear silicone of approximate viscosity 1000 mPa.s (3.963 g) was added and further mixed. Platinum catalyst solution (containing 1% Pt) (0.078 g) was added, and the mixture is further mixed. The mixture was placed in an oven at 120 °C for 1 h, however, the mixture was liquid-like and no curing took place.

### Example of use of silyl modified CD for controlled release of geraniol from an elastomer:

A cured elastomer/CD/geraniol sample (VP141-2-1) containing 10:1 mole ratio of geraniol to CD was prepared by using the following procedure: Trimethylsilyl-β-cyclodextrin CH62 (1.41 g, 0.59 mmol) and geraniol (0.90 g, 5.9 mmol) were added to a plastic cup and mixed using a SpeedmixerTM for 2 min at 2000 rpm (mixing was repeated 2-3 times). The mixture appeared almost homogeneous. SiH terminated linear silicone of approximate formula MHD220MH and approximate viscosity 1000 mPa.s (13.95 g), SiH terminated and pendant SiH containing silicone of approximate formula MHD95.5DH9.6MH and having an approximate viscosity of 165 mPa.s (0.71 g), vinyl terminated linear silicone of approximate viscosity 1000 mPa.s (22.31 g) and platinum catalyst solution (0.078 g) were added to the cup and mixed using SpeedmixerTM for 2 min at 2000 rpm (x 3-4 times). The resulted clear and colorless mixture was left in the tightly closed cup for 24-36 h to cure at room temperature to get a cured elastomer sample.

A control sample (VP141-2-0), which does not contain any silylated CD, was prepared using the following procedure: SiH terminated linear silicone of approximate formula MHD220MH and approximate viscosity 1000 mPa.s (14.13 g), SiH terminated and pendant SiH containing silicone of approximate formula MHD95.5DH9.6MH and having an approximate viscosity of 165 mPa.s (0.77 g), and geraniol (0.93 g) were weighed and placed in a plastic cup and mixed using SpeedmixerTM for 2 min at 2000 rpm (mixing was repeated 2 times). Then, vinyl terminated linear silicone of approximate viscosity 1000 mPa.s(23.09 g) and platinum catalyst solution (0.075 g) were added to the cup and mixed using SpeedmixerTM for 2 min at 2000 rpm (mixing was repeated 2-3 times). The resultant clear, colorless mixture was left in the tightly closed cup for 24-36 h to cure at room temperature to get a cured elastomer sample.

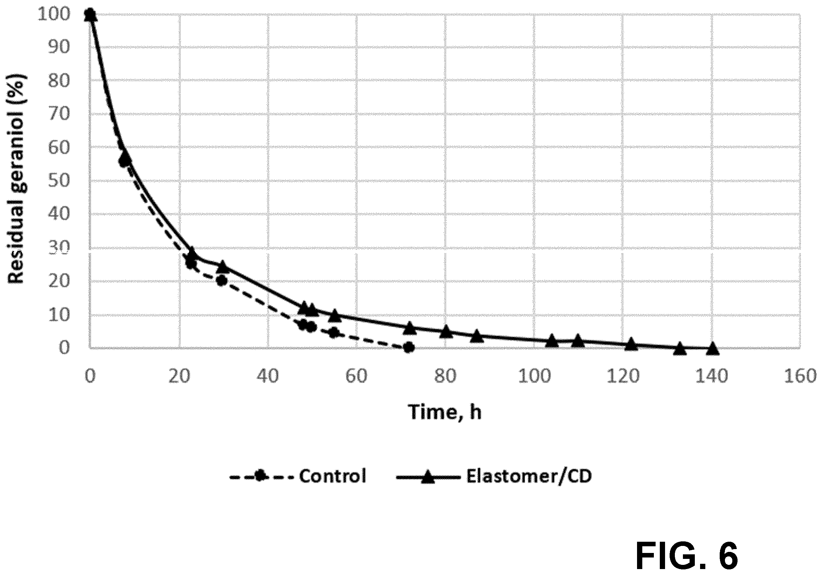

The release of geraniol from both samples (the one containing silylated CD = inventive and the control = not inventive) was studied by heating the samples in a Thermo Scientific Heratherm oven at 60 °C for 150 h and measuring the weight loss. The release profiles of geraniol showing the residual amounts are shown in Figure 6.

Initially, a fast release of geraniol was observed from both samples due to the loss of excess, uncomplexed geraniol. It should be noted that pure geraniol evaporates completely only in a few hours. Control elastomer sample (VP141-2-0) releases all geraniol in 72 h while in the elastomer/CD sample ~ 6% of geraniol still remained at that point. The remaining amount of geraniol corresponded to that present in a 1:1 complex with CD, and much slower release was observed thereafter.

Geraniol was completely released after 140 h from the elastomer/CD sample. Thus, the sample VP141-2-1 containing geraniol/CD prolongs the release up to 140 h.

### Example of use of silyl modified CD for controlled release of alpha-tocopherol from an elastomer:

First an inclusion complex was prepared between trimethysilylvinyldimethylsilyl-β-cyclodextrin CH74 and alpha-tocopherol. Excess tocopherol (20:1 mole ratio between tocopherol and CD) was used. Trimethysilyl-vinyldimethylsilyl-β-cyclodextrin (CH74, 0.608 g, 0.259 mmol) was weighed and placed into a mortar and then thoroughly ground prior to the addition of tocopherol. Tocopherol (2.229 g, 5.176 mmol) was added to the silyl-CD (CH74) and ground with a pestle for 15 min. The mixture was a yellowish semi-solid. It was checked for isolated chunks of solid and the grinding continued until no chunks were observed.

### An elastomer/CD/tocopherol (20:1 tocopherol: CD mole ratio) matrix (VP142-1) was prepared using the following procedure:

2.837 g of the prepared tocopherol-CD combination, which contains the complex and excess tocopherol (20:1 tocopherol: CD by mole) was placed in a plastic cup and SiH terminated linear silicone of approximate formula MHD220MH and approximate viscosity 1000 mPa.s (12.00 g) was added. The cup with the mixture was mixed in a SpeedmixerTM for 2 min at 2000 rpm (x 3 times) until a homogeneous mixture formed. Vinyl terminated linear silicone of approximate viscosity 1000 mPa.s (8.194 g) and platinum catalyst solution (0.0230 g) were added and mixed using SpeedmixerTM for 2 min at 2000 rpm (x 2 times). The resultant mixture was used to make a draw-down film (15 mil thickness) on a MYLARTM sheet. The film was placed in a preheated oven (80° C) and left to cure for 2 h to obtain a cured elastomer film.

A control elastomer sample (VP142-0), which does not contain any silylated CD, was prepared using the following procedure: SiH terminated linear silicone of approximate formula MHD220MH and approximate viscosity 1000 mPa.s (10.00 g), SiH terminated and pendant SiH containing silicone of approximate formula MHD95.5DH9.6MH and having an approximate viscosity of 165 mPa.s (0.200 g), and alpha-tocopherol (2.409 g) were weighed and placed in a plastic cup and mixed using SpeedmixerTM for 2 min at 2000 rpm (x 4). Then, vinyl terminated linear silicone of approximate viscosity 1000 mPa.s (12.27 g) and platinum catalyst solution (0.0249 g) were added to the cup and speedmixed for 2 min at 2000 rpm (x 4). This resulted in a sticky, milky, and yellowish mixture. The resultant mixture was used to make a draw-down film (15 mil) on MYLARTM sheet. The film was placed in a preheated oven (80° C) and left to cure for 2 h.

The release of tocopherol from two samples, elastomer/CD (VP142-1) and control (VP142-0), was studied in the following way:
Punch out samples from the cured films using a biopsy punch of 1 cm diameter, weigh them and record their exact masses. Place each sample in a sealed glass vial and fill the vial with 16.00 g of isopropanol (IPA). Place the vials (each with a sample and IPA) on an orbital shaker. The tocopherol concentration in the IPA solution was measured by drawing aliquots at different time intervals and analyzing by HPLC. The residual tocopherol wt.% remaining in each sample was subsequently calculated.

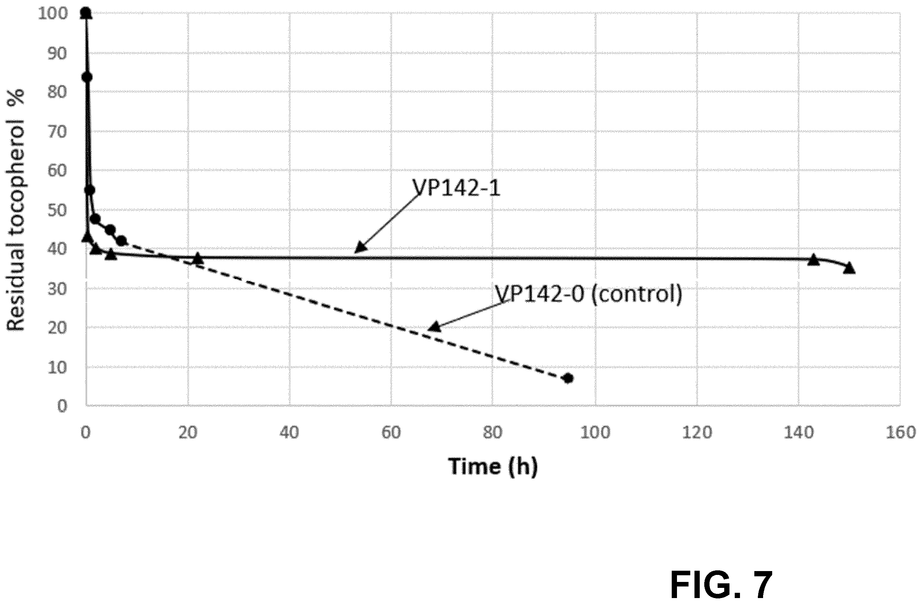

The release profile of α-tocopherol from a silicone matrix, showing the remaining amount of tocopherol at different time intervals, for the elastomer-CD- tocopherol sample VP142-1 (solid) = inventive and the control VP-142-0 (dotted) = not inventive is shown in Figure 7.

Initial fast release due to excess tocopherol from both samples was observed. Subsequent release was much faster from the control sample (after 95 h, only ~6% tocopherol remained). Slower (more prolonged) release of tocopherol was observed for the silyl-CD containing elastomer sample (after 150 h, ~35% of tocopherol still remained).

## Claims

1. A curable silicone rubber composition comprising
- 20-99.9 weight % of a Silicone Matrix, and
- 0.1-80 weight % of at least one Cyclodextrin (CD) modified by a silylation reaction to comprise silyl groups of the formula (1)
-(OSi(R¹)₃)ₓ (1)
with the provision that
R¹ is independently from each other the same or different an alkyl-, alkylene-, aryl- or alkyl-substituted aryl group, carbonyl; and
x is a number from 1 to 96;
- 0 to 50 weight % of at least one active guest molecule, always based on the total silicone rubber composition,
with the proviso that all components always sum up to 100 weight %.

2. A curable silicone rubber composition according to claim 1, with the provision that the curable silicone rubber composition is an addition curable silicone composition.

3. A curable silicone rubber composition according to claim 1 or 2 with the provision that R¹ is selected from methyl, ethyl, vinyl and phenyl.

4. A curable silicone rubber composition according to claim 1 to 3 with the provision that x is a number from 1 to 30.

5. A curable silicone rubber composition according to claim 1 to 3, with the provision that the guest molecules are selected from the group comprising drugs, pharmaceutical products, cosmetic or personal care or wellness actives, biocides, insecticides, fungicides, herbicides, pheromones, fragrances, flavorings, pigments, pharmaceutical active compounds, natural or other oils, antigens, active compounds for antistatic finishing or flame-retardant finishing, stabilizers (UV), dyestuffs, odor causing molecules or a combination of two or more.

6. A method for producing the inventive curable silicone rubber composition according to claims 1 to 5 by mixing all the compounds by standard mixing techniques at room temperature or by heating.

7. A silicone product obtainable by filling into a form or applying onto a surface the curable silicone rubber composition according to claims 1 to 5 and subsequently curing it.

8. Use of the silicone product according to claim 7, when comprising actives, for controlled, delayed, or triggered release of such actives.

9. Use of the silicone product according to claim 8 in pharmaceutical-, cosmetic-, personal care-, wellness-, room fragrance-, biocides-, insecticides-, fungicides-, herbicides-, textile-applications.

10. Use of the silicone product according to claim 7, when not comprising actives, in applications for capturing of unwanted agents.

## Patentansprüche

1. Härtbare Silikonkautschukzusammensetzung, umfassend
- 20-99,9 Gew.-% einer Silikonmatrix, und
- 0,1-80 Gew.-% mindestens eines Cyclodextrins (CD), das durch eine Silylierungsreaktion modifiziert ist, so dass es Silylgruppen der Formel (1) umfasst:
-
(OSi(R¹)₃)ₓ (1)
mit der Maßgabe, dass
R¹ unabhängig voneinander gleich oder verschieden ist und für eine Alkyl-, Alkylen-, Aryl- oder alkylsubstituierte Arylgruppe, Carbonyl steht; und
x eine Zahl von 1 bis 96 ist;
- 0 bis 50 Gew.-% mindestens eines aktiven Gastmoleküls, immer bezogen auf die gesamte Silikonkautschukzusammensetzung, mit der Maßgabe, dass sich alle Komponenten immer auf 100 Gew.-% summieren.

2. Härtbare Silikonkautschukzusammensetzung nach Anspruch 1, mit der Maßgabe, dass die härtbare Silikonkautschukzusammensetzung eine additionshärtbare Silikonzusammensetzung ist.

3. Härtbare Silikonkautschukzusammensetzung nach Anspruch 1 oder 2, mit der Maßgabe, dass R¹ ausgewählt ist aus Methyl, Ethyl, Vinyl und Phenyl.

4. Härtbare Silikonkautschukzusammensetzung nach Anspruch 1 bis 3, mit der Maßgabe, dass x eine Zahl von 1 bis 30 ist.

5. Härtbare Silikonkautschukzusammensetzung nach Anspruch 1 bis 3, mit der Maßgabe, dass die Gastmoleküle ausgewählt sind aus der Gruppe umfassend Arzneimittel, pharmazeutische Produkte, Kosmetik- oder Körperpflege- oder Wellness-Wirkstoffe, Biozide, Insektizide, Fungizide, Herbizide, Pheromone, Duftstoffe, Aromastoffe, Pigmente, pharmazeutische Wirkstoffe, natürliche oder andere Öle, Antigene, Wirkstoffe zur antistatischen Ausrüstung oder flammhemmenden Ausrüstung, Stabilisatoren (UV), Farbstoffe, geruchsverursachende Moleküle oder eine Kombination von zwei oder mehr.

6. Verfahren zur Herstellung der erfindungsgemäßen härtbaren Silikonkautschukzusammensetzung gemäß den Ansprüchen 1 bis 5 durch Mischen aller Verbindungen nach üblichen Mischtechniken bei Raumtemperatur oder durch Erwärmen.

7. Silikonprodukt, erhältlich durch Abfüllen der härtbaren Silikonkautschukzusammensetzung gemäß den Ansprüchen 1 bis 5 in eine Form oder Aufbringen auf eine Oberfläche und anschließendes Härten.

8. Verwendung des Silikonprodukts nach Anspruch 7, wenn es Wirkstoffe umfasst, zur kontrollierten, verzögerten oder getriggerten Freisetzung solcher Wirkstoffe.

9. Verwendung des Silikonprodukts nach Anspruch 8 in Pharma-, Kosmetik-, Körperpflege-, Wellness-, Raumduft-, Biozid-, Insektizid-, Fungizid-, Herbizid-, Textilanwendungen.

10. Verwendung des Silikonprodukts nach Anspruch 7, wenn es keine Wirkstoffe umfasst, in Anwendungen zum Einfangen von unerwünschten Mitteln.

## Revendications

1. Composition de caoutchouc de silicone durcissable comprenant
- 20-99,9 % en poids d'une matrice de silicone et
- 0,1-80 % en poids d'au moins une cyclodextrine (CD) modifiée par une réaction de silylation pour comprendre des groupes silyle de formule (1)
-
(OSi(R¹)₃)ₓ (1)
à condition que
R¹ soit, indépendamment l'un de l'autre identique ou différent, un groupe alkyle, alkylène, aryle ou aryle substitué par alkyle, carbonyle ; et
x est un nombre de 1 à 96 ;
- 0 à 50 % en poids d'au moins une molécule hôte active, toujours sur la base de la composition totale de caoutchouc de silicone, à condition que tous les composants totalisent toujours jusqu'à 100 % en poids.

2. Composition de caoutchouc de silicone durcissable selon la revendication 1, à condition que la composition de caoutchouc de silicone durcissable soit une composition de silicone durcissable par addition.

3. Composition de caoutchouc de silicone durcissable selon la revendication 1 ou 2, à condition que R¹ soit choisi parmi un groupe méthyle, éthyle, vinyle et phényle.

4. Composition de caoutchouc de silicone durcissable selon les revendications 1 à 3, à condition que x soit un nombre de 1 à 30.

5. Composition de caoutchouc de silicone durcissable selon les revendications 1 à 3, à condition que les molécules hôtes soient choisies dans le groupe comprenant les médicaments, les produits pharmaceutiques, les agents actifs cosmétiques ou de soins personnels ou de bien-être, les biocides, les insecticides, les fongicides, les herbicides, les phéromones, les fragrances, les arômes, les pigments, les composés actifs pharmaceutiques, les huiles naturelles ou autres, les antigènes, les composés actifs pour finition antistatique ou finition ignifuge, les stabilisants (UV), les substances colorantes, les molécules provoquant des odeurs ou une combinaison de deux ou plus.

6. Procédé de préparation de la composition de caoutchouc de silicone durcissable selon les revendications 1 à 5, par mélange de tous les composés par des techniques de mélange classiques à température ambiante ou par chauffage.

7. Produit de silicone pouvant être obtenu en remplissant dans un moule ou en appliquant sur une surface la composition de caoutchouc de silicone durcissable selon les revendications 1 à 5, et subséquemment en la durcissant.

8. Utilisation du produit de silicone selon la revendication 7, lorsqu'il comprend des agents actifs, pour la libération contrôlée, retardée ou déclenchée de tels agents actifs.

9. Utilisation du produit de silicone selon la revendication 8 dans des applications pharmaceutiques, cosmétiques, de soins personnels, de bien-être, de fragrance d'ambiance, biocides, insecticides, fongicides, herbicides, et de textiles.

10. Utilisation du produit silicone selon la revendication 7, lorsqu'il ne comprend pas d'agents actifs, dans des applications pour la capture d'agents indésirables.
